# EUROPEAN PATENT SPECIFICATION

(11) **EP 2 427 093 B1**
(45) Date of publication and mention of the grant of the patent: **17.04.2019**
(21) Application number: 10772321.5
(22) Date of filing: 23.04.2010
(51) Int. Cl.: G05B 19/042

(54) **A METHOD OF CONTROLLING A PROCESS**
VERFAHREN ZUR PROZESSSTEUERUNG
PROCÉDÉ DE COMMANDE D'UN PROCESSUS

(30) Priority: 05.05.2009 SE 0900600
(43) Date of publication of application: 14.03.2012
(73) Proprietor: Tetra Laval Holdings & Finance S.A., 1009 Pully (CH)
(72) Inventor: YNDÈN, Mats, S-247 97 Flyinge (SE)
(74) Representative: Tetra Pak - Patent Attorneys SE
(86) International application number: PCT/SE2010/000105
(87) International publication number: WO 2010/128919

(56) References cited:
- WO-A2-2004/030435
- GB-A- 1 414 790
- GB-A- 2 034 927
- GB-A- 2 070 648
- US-A- 4 469 150

## Description

### TECHNICAL FIELD

The present invention relates to a method of controlling a process, the process being carried out at a plant or a facility which comprises closed conduits filled with a liquid, process equipment filled with the liquid, control equipment, as well as at least one flow meter.

### BACKGROUND ART

Different processes for food handling, such as in dairies or juice factories, are normally controlled by so-called sequential control. The processes may, for example, consist of a washing process, a pasteurizer or a continuous mixing process.

Sequential control implies that the different steps in a sequence are connected to activations or actions. Each sequence step is conditional, so that for example a certain temperature must have been reached before the activation or the action is executed, and before the next step in the sequence. When such a sequential control is realised, attempts are made at the same time to foresee events which could conceivably occur and it is also necessary to take into account the actual point at which the process is in its total cycle. For example, a normal washing process may consist of approx. 30 to 40 sequential steps, sometimes with parallel sub sequences. This is a complex and time-consuming method of realising the control of a process.

Sequential control is a relatively rigid method of controlling a process and changes in the process most generally require major reworking of the sequences. The more complex the process to be controlled, the more sequential steps are required. For example, within the washing processes, there occur many different washing programs or combinations of washing program sequences, many of them being facility-specific. For each such washing process, an adapted sequential control is required.

Traditional sequential control is relatively difficult to overview, and deviations in the process, be they intentional or unintentional, are difficult to handle. Deviations may be difficult to foresee, and combinations of deviations may result in the process and the program sequences becoming unsynchronised. Sequential control is not always that exact, and, for example, the handling of small volumes is difficult to carry out using this method. Some remotely related art is reflected by patent documents WO 2004/030435 A2 and US 4469150 A.

### OBJECTS OF THE INVENTION

One object of the present invention is to realise a method of controlling a washing process which is simpler to program.

A further object of the present invention is to realise a method of controlling a washing process which is more accurate than traditional prior art methods and which affords the possibility of handling small volumes in a washing process as well.

### SOLUTION

The objects of the invention are attained by the method defined in independent claim 1.
Other advantageous embodiments are defined in the dependent claims.

### BRIEF DESCRIPTION OF THE ACCOMPANYING DRAWING

One preferred embodiment of the present invention will now be described in greater detail hereinbelow, with reference to the accompanying Drawing. In the accompanying Drawing:

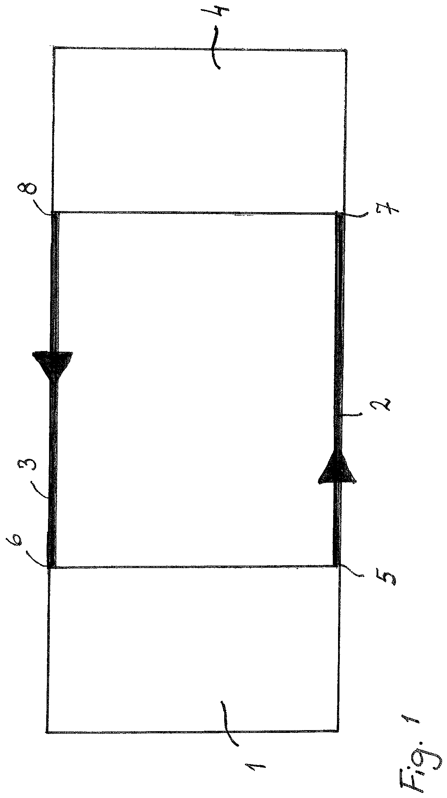

Fig. 1 is a skeleton outline of the method according to the present invention.

### DESCRIPTION OF PREFERRED EMBODIMENT

The method according to the present invention is described hereinbelow by means of examples from washing processes within the food industry, but may also be applied to other processes, such as the process which takes place in a pasteurizer, from the balancing tank to the pasteurizer, with associated homogenization equipment, and holding cell, and further to storage in buffer tanks. Another example is the process for continuous mixing.

The method according to the present invention is illustrated schematically in Fig. 1. The block 1 may, for example, consist of a washing unit, i.e. a unit which portions out and recycles washing liquids according to a predetermined recipe or cycle of events.

From the block 1, departs a pressure conduit 2 consisting of pipes and bends. A return conduit 3 also enters the block 1, this return conduit consisting of pipes and bends also. Between the pressure conduit 2 and the return conduit 3, there is some form of process equipment which, in the illustrated example, consists of a washing object 4.

The pressure conduit 2 has a predetermined filling volume, volume A. The return conduit 3 has a predetermined filling volume, volume B. Similarly, the washing object 4 has a filling volume, volume C. The volumes A, B, C are determined on activation of the food plant or facility, and assume constant values. The control according to the invention presupposes that the volumes A, B and C are filled during the process.

A control unit (not shown) is also associated with the food equipment, consisting of closed pipe conduits 2, 3 and a processing unit. The control unit consists of a register for processing and handling data and is of the type which is called an FIFO register (First In, First Out) which, according to the present invention constitutes a real time image of the process, for example different types of washing liquids and where they are located in the process. If the control equipment does not include an FIFO register, the control equipment must be upgraded with such a register in order to carry out the method according to the present invention.

A point 5 constitutes the start of the pressure conduit 2 and is that point where data enters into the register. The data may, for example, consist of information about which washing liquids are fed out into the pressure conduit and what is to happen to them when they arrive at the end of the return conduit 3. For carrying the method into effect, a flow meter is preferably positioned at point 5.

At a point 6, information from actions after the return conduit 3 is read off. Possibly, an additional flow meter or other measurement device may be positioned at point 6, which however is not a precondition for carrying out the method according to the present invention. An extra flow meter could satisfy a need in those cases when the volume in the washing object 4 varies, or when a certain quantity of liquid is lost in the washing object 4. The register is then divided up between both of the flow meters.

A point 7 may be used as support function for filling the circuit on change of washing liquid. If the register is read off at point 7, it may be possible to discover when the next washing phase reaches the washing object 4. Then, for example the washing pressure may make a stop so that the washing object 4 can, when necessary, be completely drained.

A point 8 may be used as support function for taking care of residual product from the washing object 4 at the beginning of the pre-rinsing phase. If data is entered at point 8, during a period which corresponds to the washing object volume C, or data from another measurement equipment, it is possible to sort the residual product at point 6, for example depending upon type of product or conductivity.

Flow meters or other measurement equipment may also be positioned at other places on both the pressure conduit 2 and the return conduit 3. Other measurement equipment may, for example, consist of temperature gauges. However, for carrying the method according to the present invention into effect, it is only necessary to provide a flow meter, which is then preferably positioned at point 5.

Points 5, 6, 7 and 8 are examples of interaction points whose counterparts are to be found in the register, and where it is possible to read and/or write in data in response to the needs of the process. At an optional interaction point, it is thus possible to enter data intended for incidents/actions which are to be carried out at one or more interaction points downstream in the flow and/or it is possible to read data for executing incidents/actions based on data from one or more interaction points upstream in the flow. An optional number of interaction points may be positioned in the conduits 2, 3 or in the process equipment which, in the example, consists of the washing object 4.

The flow meter emits pulses to the control equipment for stepping the register forwards, i.e. all data in the register is simultaneously stepped forwards one step per pulse. In that type of process which the example describes, one pulse normally corresponds to one litre, which gives more than sufficient accuracy. In the register, each step represents the same volume, e.g. one litre per step. The speed at which the register is stepped forwards follows and varies with the flow speed, indicated by the flow meter. For large flows, or if the volumes A and B in the conduits 2 and 3 are large, i.e. the conduits are extremely long, it may prove necessary to employ a plurality of litres per step. The memory capacity of the register may also limit the minimum volume of the steps. In that case, the memory capacity must be distributed among the steps so that the least possible step volume is obtained. In such adaptations of the step volume, corresponding adjustments of the pulses from the flow meter are put into effect, i.e. litre/pulse corresponds to litre/step.

The register is an information vehicle, it remembers and recalls the sequence of that data which is entered in the interaction points according to a predetermined cycle of events or chain of events. In point 5, such a cycle of events or chain of events for example comprises a washing recipe or a mixing recipe. Such a washing recipe may, for example, consist of pre-rinsing, washing with lye, middle rinsing, acid washing, after-rinsing and finally draining.

The starting point of the register is represented by the beginning of the pressure conduit 2, i.e. point 5. Data which is entered into the input of the register is, in the example of a washing process, that type of liquid which is fed out into the pressure conduit 2, the requested functionality when the liquid reaches the end of the return conduit 3, as well as the conductivity level of the liquid in order to be able to sort it correctly.

The output point of the register is represented by the end point of the return conduit 3, i.e. point 6. Between the pressure conduit 2 and the return conduit 3, there is disposed the washing object 4.

The register is stepped forwards with the aid of pulses from the flow meter which is preferably positioned at point 5. Additional flow meters may occur in the conduits 2 and 3 or in the process equipment. The register is then divided up between those flow meters that occur.

Thus, the register functions as a distributor of events from the side of the pressure conduit 2 to the side of the return conduit 3, with that time lag which the process proper constitutes. The time lag depends on volume and flow, where the volume starts from the fixed value and the flow constitutes an instantaneous value. The volume C for the process equipment, for example a washing object 4, for which the process is intended, is determined on start-up of the process equipment, as well as the volumes A and B for the pressure conduit 2 and the return conduit 3, respectively. The flow is obtained from the flow meter or alternatively flow meters.

As a result of the carrying into effect of the method according to the present invention, the major sequence steps, i.e. the process steps in a sequential control, need only consist of events that are to be executed in point 5. Events that are to be executed at the remaining parts of the pressure conduit 2, the return conduit 3 and in the washing object 4 need not be included among these steps. The number of sequence steps is then drastically reduced compared with traditional prior art sequential control. There will only remain one sequence which directly reflects the cycle of events that is to be executed in accordance with the washing recipe. There will be obtained a simpler and more accurate control of the process equipment which is to be activated at the correct point in time throughout the entire process. For a washing process, this may, e.g. entail that there will be a reduction in consumption, or less waste of washing liquids, since the method according to the present invention makes possible control of relatively small volumes in the process.

The register constitutes, according to the present invention, a dynamic product memory that may improve security in manual process stepping, or in disruptions to the process. The register keeps track of at what position the process is located and this also provides a possibility of displaying the process graphically. The method according to the present invention also implies that the risk of bugs in the development of program codes in the control equipment is reduced, which can occur in traditional prior art sequential control.

As will have been apparent from the foregoing description, the present invention realises a method of controlling a process which affords a general simplification of the programming work. The method according to the present invention further provides a simple and accurate control of the process. Further, the method according to the present invention facilitates adaptation to specific processes which are adapted to an individual piece of process equipment. The method according to the present invention further makes possible handling of small volumes in a process, which may be difficult to handle using conventional prior art process control methods. As a result of the present invention, there will be obtained a possibility of constantly plotting in detail the actual progressional position in the process during its execution.

## Claims

1. A method of controlling a washing process, the process being executed in a food handling installation or a food handling facility which includes a washing unit (1) adapted to portion out and recycle washing liquids according to a predetermined cycle of events,
closed conduits (2, 3) filled with washing liquid, a washing object (4) filled with washing liquid, control equipment, as well as
at least one flow meter adapted to measure the flow of the washing liquid, wherein the flow meter is adapted to emit pulses to a FIFO register in the control equipment, and that the FIFO register is stepped forwards by the pulses so that the register, together with the control equipment, emits signals for executing the washing process actions necessary for the washing process cycle according to the predetermined cycle of events.

2. The method as claimed in claim 1, wherein the FIFO register is adapted to distribute events, according to the predetermined cycle of events, with a time lag depending on washing liquid volume and flow of the washing liquid, measured by the flow meter, where the washing liquid volume starts from a fixed value and the washing liquid flow is an instantaneous value measured by the flow meter.

3. The method as claimed in claim 2, wherein one of the closed conduits (2, 3) is a pressure conduit (2) and the other of the closed conduits (2, 3) is as return conduit (3) and the time lag depends on the total washing liquid volume which consists of the volume A of the pressure conduit (2), the volume B of the return conduit (3) and the volume C of the washing object (4), as well as of the flow through the flow meter.

4. The method as claimed in claim 1, wherein one pulse emitted by the flow meter corresponds to one litre of washing liquid.

## Patentansprüche

1. Verfahren zum Steuern eines Waschprozesses, wobei der Prozess in einer Lebensmittelverarbeitungsanlage oder Lebensmittelverarbeitungseinrichtung ausgeführt wird, die Folgendes einschließt:
eine Wascheinheit (1), die dazu angepasst ist, Waschflüssigkeiten gemäß einem festgelegten Ablaufzyklus zu portionieren und rückzuführen,
geschlossene Leitungen (2, 3), die mit Waschflüssigkeit gefüllt sind,
ein Waschobjekt (4), das mit Waschflüssigkeit gefüllt ist,
eine Steuerungseinrichtung sowie mindestens einen Durchflussmesser, der dazu angepasst ist, den Durchfluss der Waschflüssigkeit zu messen,
wobei der Durchflussmesser dazu angepasst ist, Impulse an einen FIFO-Speicher in der Steuerungsausrüstung abzugeben, und dass
der FIFO-Speicher durch die Impulse weitergestuft wird, sodass der Speicher zusammen mit der Steuerungsausrüstung Signale abgibt, um die für den Waschprozesszyklus gemäß des festgelegten Ablaufzyklus notwendigen Waschprozessmaßnahmen durchzuführen.

2. Verfahren nach Anspruch 1, wobei der FIFO-Speicher dazu angepasst ist, Abläufe gemäß des festgelegten Ablaufzyklus zu verteilen, wobei eine Verzögerung von der Waschflüssigkeitsmenge und dem von dem Durchflussmesser gemessenen Durchfluss der Waschflüssigkeit abhängig ist, wobei die Waschflüssigkeitsmenge bei einem festen Wert beginnt und der Waschflüssigkeitsdurchfluss ein von dem Durchflussmesser gemessener Istwert ist.

3. Verfahren nach Anspruch 2, wobei eine der geschlossenen Leitungen (2, 3) eine Druckleitung (2) ist und die andere der geschlossenen Leitungen (2, 3) eine Rücklaufleitung (3) ist und die Verzögerung von der Gesamtwaschflüssigkeitsmenge, die aus der Menge A aus der Druckleitung (2), der Menge B aus der Rücklaufleitung (3) und der Menge C aus dem Waschobjekt besteht (4), sowie dem Durchfluss durch den Durchflussmesser abhängig ist.

4. Verfahren nach Anspruch 1, wobei ein von dem Durchflussmesser abgegebener Impuls einem Liter Waschflüssigkeit entspricht.

## Revendications

1. Procédé de commande d'un processus de lavage, le processus étant exécuté dans une installation de manipulation d'aliments ou un dispositif de manipulation d'aliments qui comprend :
une unité de lavage (1) conçue pour doser et recycler les liquides de lavage en fonction d'un cycle prédéfini d'événements,
des conduits fermés (2, 3) remplis de liquide de lavage,
un objet de lavage (4) rempli de liquide de lavage,
un équipement de commande, ainsi qu'au moins un débitmètre conçu pour mesurer le débit du liquide de lavage, le débitmètre étant conçu pour émettre des impulsions vers un registre FIFO dans l'équipement de commande, et en ce que le registre FIFO est avancé par les impulsions de sorte que le registre, avec l'équipement de commande, émette des signaux pour exécuter les actions de processus de lavage nécessaires au cycle de processus de lavage selon le cycle prédéfini d'événements.

2. Procédé selon la revendication 1, le registre FIFO étant conçu pour distribuer des événements, selon le cycle prédéfini d'événements, avec un décalage dans le temps en fonction du volume de liquide de lavage et du débit du liquide de lavage, mesuré par le débitmètre, le volume de liquide de lavage commençant à une valeur fixe et le débit du liquide de lavage étant une valeur instantanée mesurée par le débitmètre.

3. Procédé selon la revendication 2, l'un des conduits fermés (2, 3) étant un conduit sous pression (2) et l'autre des conduits fermés (2, 3) étant un conduit de retour (3) et le décalage dans le temps dépendant du volume total de liquide de lavage qui est constitué par le volume A du conduit sous pression (2), le volume B du conduit de retour (3) et le volume C de l'objet de lavage (4) ainsi que le débit à travers le débitmètre.

4. Procédé selon la revendication 1, une impulsion émise par le débitmètre correspondant à un litre de liquide de lavage.
